(19) Europäisches Patentamt
European Patent Office
Office européen des brevets

(11) Publication number: **0 164 870**
**A2**

(12) # EUROPEAN PATENT APPLICATION

(21) Application number: 85303136.7

(22) Date of filing: 02.05.85

(51) Int. Cl.$^4$: G 06 F 15/02
A 47 G 33/00, G 04 G 1/00

(30) Priority: 04.05.84 GB 8411546

(43) Date of publication of application:
18.12.85 Bulletin 85/51

(84) Designated Contracting States:
DE FR GB

(71) Applicant: Jalanbo, Ziad
P.O. Box 8563
Jeddah 21492(SA)

(72) Inventor: Jalanbo, Ziad
P.O. Box 8563
Jeddah 21492(SA)

(74) Representative: Whalley, Kevin et al,
Marks & Clerk 57/60 Lincoln's Inn Fields
London WC2A 3LS(GB)

(54) **Calculator.**

(57) An electronic calculator comprising:
facilities for performing conventional arithmetical operations,
date input means,
manual input means for receiving numerical data for said facilities and for receiving as a manual input data corresponding to the position on the earth of a location,
preprogrammed means for calculating the times of sunrise, sunset, noon and the times knows as "Fajer", "Asser", and "Issha" in the Moslem day for that location, and
display means for displaying any of said calculated times and for displaying the results of any said conventional arithmetical operations.

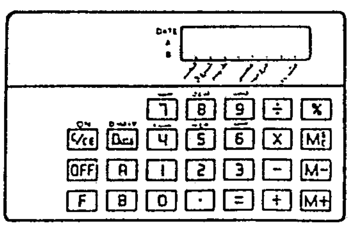


F I G. 2.

CALCULATOR

This invention relates to a pre-programmed calculator for calculating and displaying information of particular interest to specific religious groups.

In the Moslem religion there are five set periods during the twenty-four hours of each day within which prayers must be offered to God. The limits of these periods are defined by the rising and setting of the sun and by other times derived from the time of sunset and sunrise. The actual times of sunrise, noon and sunset for any location on the earth are directed by the latitude and longitude of that location by the particular date.

Most Moslem newspapers publish the relevant times daily for the particular localities of interest to them but it is difficult or inconvenient for a Moslem to obtain this information if he is abroad in a non-Moslem country or is out of reach of a newspaper.

According to a first aspect of the present invention there is provided an electronic calculator comprising:

facilities for performing conventional arithmetical operations,

date input means,

manual input means for receiving numerical data for said facilities and for receiving as a manual input data corresponding to the position on the earth of a location,

preprogrammed means for calculating the times of sunrise, sunset, noon, and the times known as "Fajer", "Asser", and "Issha" in the Moslem day for that location, and

display means for displaying any of said calculated times and for displaying the results of any said conventional arithmetical operations.

It is necessary that the calculator be provided with data concerning the date and this may be manually input by the user or may be generated by an internal clock. If a clock facility is included then the calculator may also include alarm means for generating an audible signal when the clock time coincides with one or more of the calculated times. Preferably any such alarm means can be switched on and off.

Preferably, since these are required for the solar calculations, the calculator also includes facilities for triangular functions for use e.g. in trigonemetric calculation.

The data to be input regarding the geographical location may be in the form of latitudes, longitudes and time zones, but may be in a form previously computed from latitude, or longitude and time zone information and presented in a chart or table in conjunction with a list of towns or cities throughout the world with the information for each said town or city being associated therewith.

Thus, according to a further aspect of the present invention there is provided a combination of a calculator as defined hereinbefore and a chart, list or table of towns or cities of the world and relevant data derived from latitude and longitude information for each town, to be input into the calculator.

In the accompany drawings Fig. 1 represents a flow chart of one method of performing the necessary calculations within the calculator, and

Fig. 2 is a plan view of an embodiment of a calculator according to the present invention.

The means by which the calculator can achieve the desired results may be effected in any suitable way, but there will now be described, by way of example only, one preferred method by reference to the flow chart of Fig. 1. In this embodiment six times are derived as follows:

(a) a predetermined time before sunrise ("Fajer" in the Moslem day) ($T_1$);

(b) sunrise ("Shrouk" in the Moslem day) ($T_2$);

(c) noon ("Duhur" in the Moslem day) ($T_3$);

(d) a predetermined time after noon ("Asser" in the Moslem day) ($T_4$);

(e) sunset ("Mogrape" in the Moslem day) ($T_5$);

(f) a predetermined time after sunset ("Ishaa" in the Moslem day) ($T_6$).

The calculator of the present invention may be designed to be e.g. of "credit card" size and supplied in a plastic wallet with accompanying booklet explaining the necessary data to be input relating to the geographical locations. The calculator may be powered by cylindrical, disc or wafer type batteries or may be light-powered, e.g. from solar cells.

Referring to the flow chart of Fig. 1, A and B are input, A being a numerical value derived from the longitude and time zone of a particular location and B being the latitude of that location. Date information is also input as DD (day) and MM (month) and YY (year). (The order in which the items of information A, B and date are input is optional).

The first step is to calculate a Julian day Number $t_1$ corresponding to the date input and the procedure for this is shown. Means are provided for rejecting impossible values, e.g. of day or month and for compensating for leap years. (In Fig. 1, d represents the number of days which elapsed prior to the month input).

From the Julian day number $t_1$, a value for a time variable t is calculated employing a built in constant $a_1$. Employing further built in constants $a_2$, $a_3$, $a_4$, $a_5$, and $a_6$, values for variables C, M and L are derived and used to calculate a value for D, the angle between the sun and the earth for the given date.

Since the method employed is accurate only for latitudes between $\pm 65^o$, latitude B is assumed to be $65^o$ if outside these limits.

A value for $\Delta T_1$ the time when the sun is at its Meridian is calculated from the time equation using further built in constants $a_7$, $a_8$, $a_9$, $a_{10}$, $a_{11}$ from the value of $\Delta T_1$ a preliminary value ($T'_3$) for noon ($T_3$) is calculated, using built in constant $b_1$. A preliminary value ($T'_4$) for "Asser" is then calculated, having first derived values for variables $F_6$, $F_7$, $\alpha$ and C using built in constant $b_2$, C being a time offset from noon.

At this point a check is made to see whether the latitude B is less than or equal to $45^o$. If it is then values for time offsets $C_{2,5}$ $C_6$, and $C_1$ are calculated (using built in constants $b_2$, $b_3$, $b_4$ and $b_5$) to give preliminary times $T'_2$, $T'_5$, $T'_6$ and $T'_1$ respectively for sunrise, sunset "Issha" and "Fajer". If however the latitude B is greater than $45^o$ then the time offsets $C_{2, 5}$, $C_6$ and $C_1$ are calculated for a latitude B of $45^o$. These values of time offset are used to calculate ratios $K_1$ and $K_2$. These ratios $K_1$ and $K_2$ are respectively the ratio of the length of "Fajer" to the period between sunrise and sunset at latitude $45^o$ and the ratio of the length of "Issha" to the period between sunrise and sunset at latitude $45^o$. An actual value for $C_{2,5}$ at a latitude of greater than $45^o$ is then calculated using the correct latitude. From this actual value preliminary values $T'_2$ and $T'_5$ for sunrise and sunset are calculated. For the preliminary values of $T'_1$ and $T'_6$ of "Fajer" and "Issha" at such a latitude the ratios $K_1$ and $K_2$ are applied to the said values of $T'_2$ and $T'_5$. Finally the preliminary times $T'_1$ to $T'_6$ are converted to times $T_1$ to $T_6$ in hours and minutes (12 or 24 hour clock).

The reason why it is desirable to compare the results at a latitude greater than $45^o$ with the results at latitude $45^o$ are that "Fajer" and "Issha" are supposed respectively to represent the transition from dark to twilight and vice versa. At increasing latitude greater than $45^o$ this transition takes progressively longer and eventually the traditional measures become meaningless. The method employed in the present invention is doctrinally acceptable and provides realistic results.

Referring now to Fig. 2 of the accompanying drawings, there is shown an embodiment of a calculator according to the present invention. The calculator 1 includes a liquid crystal display 2 and a plurality of pushbutton keys for issuing commands to the calculator and for inputting information. As in a conventional calculator there are provided numeric keys "0" to "9",3, as well as memory keys 4 and arithmetical operator keys 5. ON and OFF keys are provided, the ON key also acting to clear the display. The calculator 1 includes a special function key F to access the special feature of the calculator, as well as special input keys DATE, A and B. On switching on and pressing the function key once, the calculator is readied to receive DATE input as well as a numerical value A (relating to longitude and time zone) and latitude B. After input of each one of these is effected an indicator symbol is shown on the display that a said input has been received, opposite respective labels DATE, A and B. The calculator will then calculate the aforesaid times $T_1$ to $T_6$ and will store them in memory. To display any one of the said times, one of the numeric keys 9, 8, 7, 6, 5, or 4 is pressed. These correspond respectively to time $T_1$, $T_2$, $T_3$, $T_4$, $T_5$ and $T_6$. Selection of a

particular time will cause that time to appear on the display and will also cause an indicator symbol to appear opposite a respective label, Fajer, Shrouk, Duhur, Asser, Mogrape and Issha. The calculator includes circuitry such that the calculated times $T_1$ to $T_6$ are stored in memory even when the calculator is nominally OFF and can be recalled when required. To recall the times, the calculator is switched ON and the function key pressed twice.

By virtue of the present invention a calculator is provided which makes it very easy for a person to derive desired information concerning sunrise, noon, sunset etc. which may be useful in carrying out his or her religious obligations. It will be appreciated that the utility of the calculator of this invention is not restricted to Moslems or even to religious uses. The calculator will prove of use to any person who in his or her daily life need to know accurate times for sunset, sunrise or any times relative thereto, such as vehicle drivers, policemen, etc.

It will be appreciated that the invention may be performed otherwise than as particularly described, the invention therefore includes within its scope all changes and modifications which would be apparent to one skilled in the art.

CLAIMS:

1. An electronic calculator comprising facilities for performing conventional arithmetical operations,

date input means,

manual input means for receiving numerical data for said facilities and for receiving as a manual input data corresponding to the position on the earth of a location.

preprogrammed means for calculating the times of sunrise, sunset, noon, and the times known as "Fajer", "Asser" and "Issha" in the Moslem day for that location, and

display means for displaying any of said calculated times and for displaying the results of any said conventional arithmetical operations.

2. A calculator according to claim 1, wherein the input means is adapted t o receive as a manual input data relating to a particular day, month and year.

3. A calculator according to claim 1, wherein the date input means includes clock means for generating data relating to clock time and to a day, month and year.

4. A calculator according to claim 3, which includes alarm means for generating an audible signal when the clock time coincides with one or more of the calculated times.

5. A calculator according to any preceding claim, wherein the further processing means includes means for calculating triangular functions.

6. A calculator according to any preceding claim, wherein the input means is adapted to receive latitude data, longitude data and time zone data for a said location.

7. A calculator according to any one of claims 1 to 5, wherein the input means is adapted to receive numerical data in the form of a number which is a function of longitude data and time zone for a said location.

8. A calculator according to claim 6, wherein the processing means is conditioned to operate in accordance with the accompanying flow chart.

9. A calculator according to claim 1, which includes means for inputting latitude data, means for inputting longitude data and means for inputting date data; means for checking whether the latitude data input corresponds to a latitude of greater or less than $\pm 45^{\circ}$; means for calculating the period between sunrise and sunset at a latitude of $45^{\circ}$; means for calculating "Fajer" and "Issha" at a latitude of $45^{\circ}$; means for calculating the ratios of the length of said "Fajer" to the period between sunrise and sunset at latitude $45^{\circ}$ and the ratio of the length of said "Issha" to the period between sunrise and sunset at latitude $45^{\circ}$; means for calculating the time of sunrise and sunset for a said latitude corresponding to the latitude data input and which is greater than 45°; and means for applying to the period between sunrise and sunset at a said latitude the ratios previously calculated so as to obtain calculated values respectively for "Fajer" and "Issha" at a said latitude.

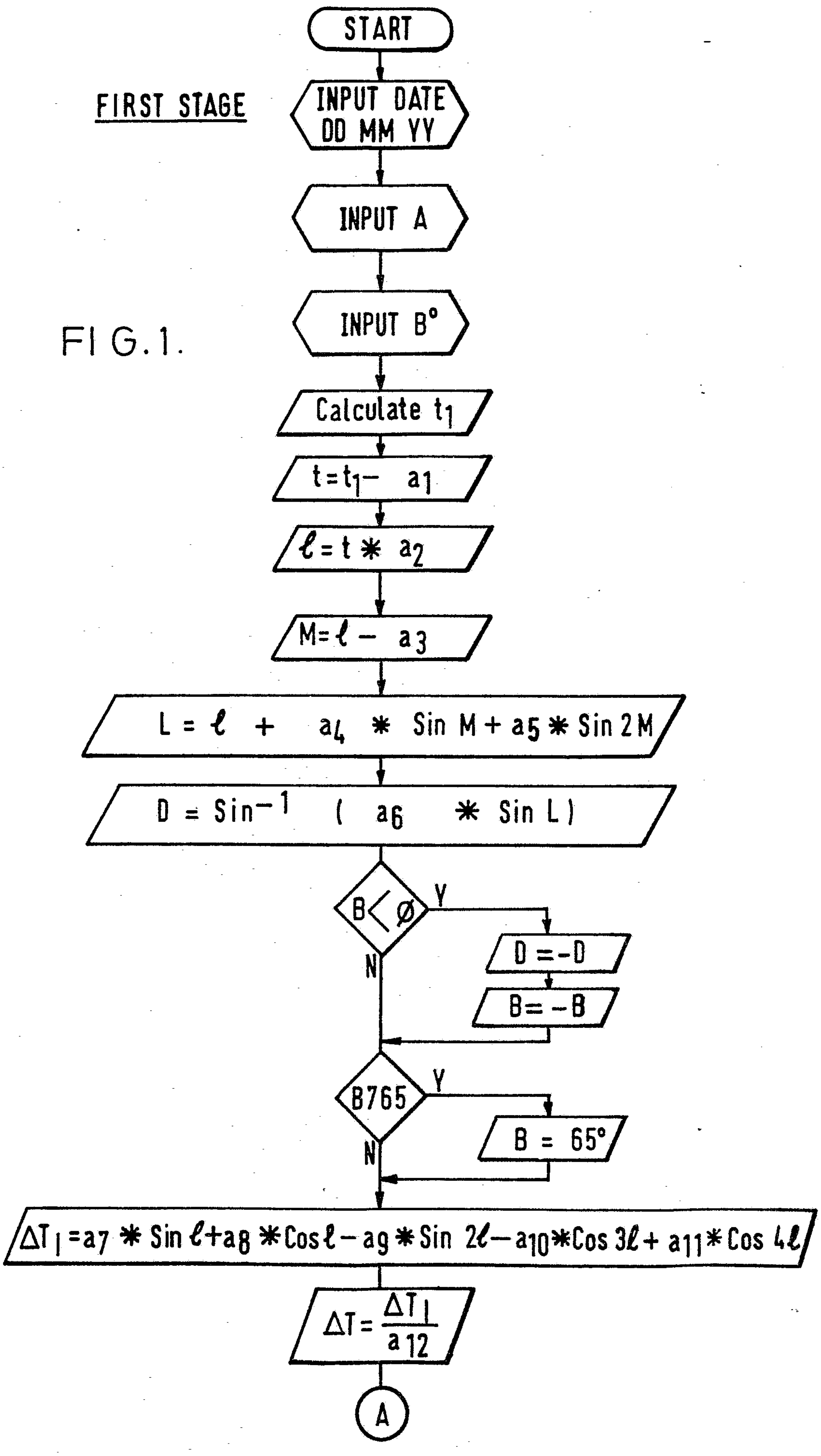
START
FIRST STAGE
INPUT DATE DD MM YY
INPUT A
INPUT B°
Calculate $t_1$
$t = t_1 - a_1$
$\ell = t * a_2$
$M = \ell - a_3$
$L = \ell + a_4 * \mathrm{Sin}\, M + a_5 * \mathrm{Sin}\, 2M$
$D = \mathrm{Sin}^{-1}(a_6 * \mathrm{Sin}\, L)$
B< Ø
Y
N
D =-D
B= -B
B765
Y
N
B = 65°
$\Delta T_1 = a_7 * \mathrm{Sin}\,\ell + a_8 * \mathrm{Cos}\,\ell - a_9 * \mathrm{Sin}\, 2\ell - a_{10} * \mathrm{Cos}\, 3\ell + a_{11} * \mathrm{Cos}\, 4\ell$
$\Delta T = \frac{\Delta T_1}{a_{12}}$
A

FIG.1.

SECOND STAGE

FIG.1.

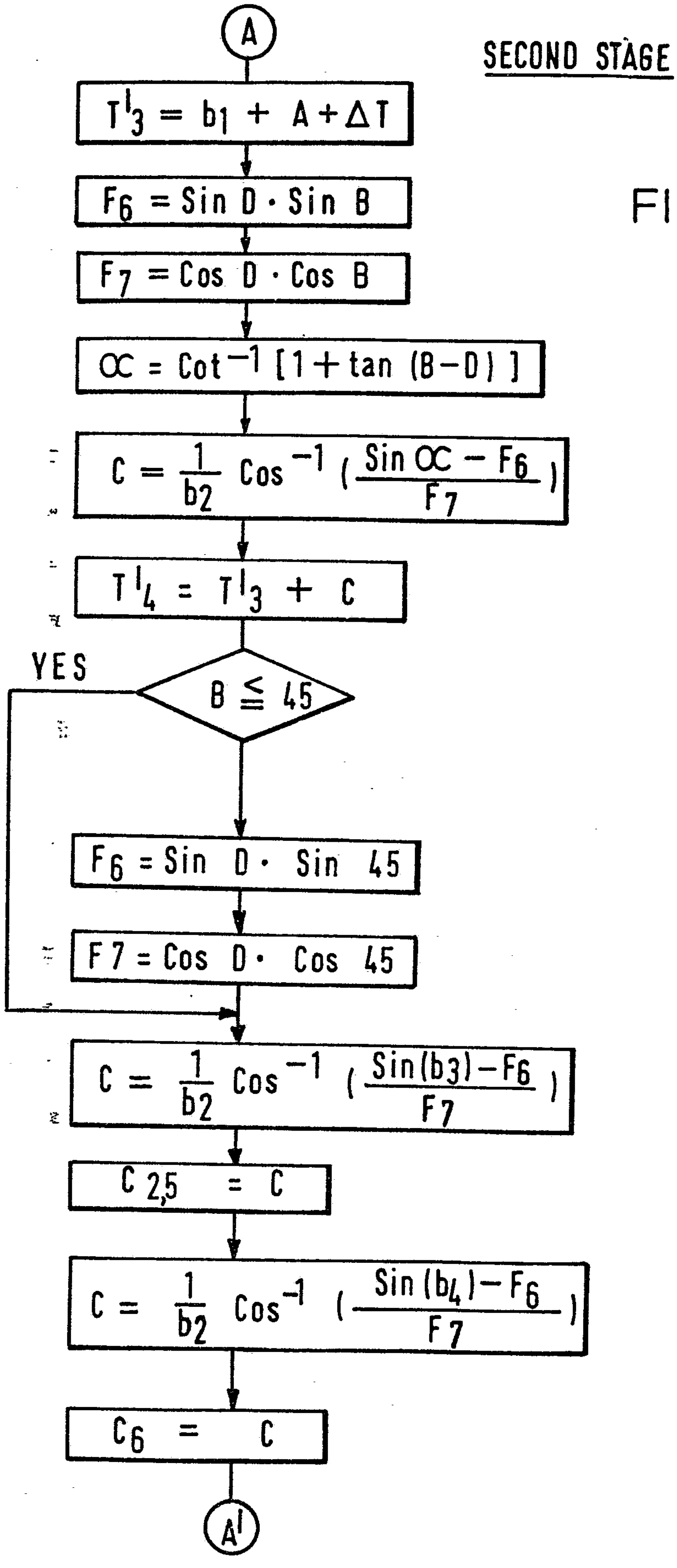

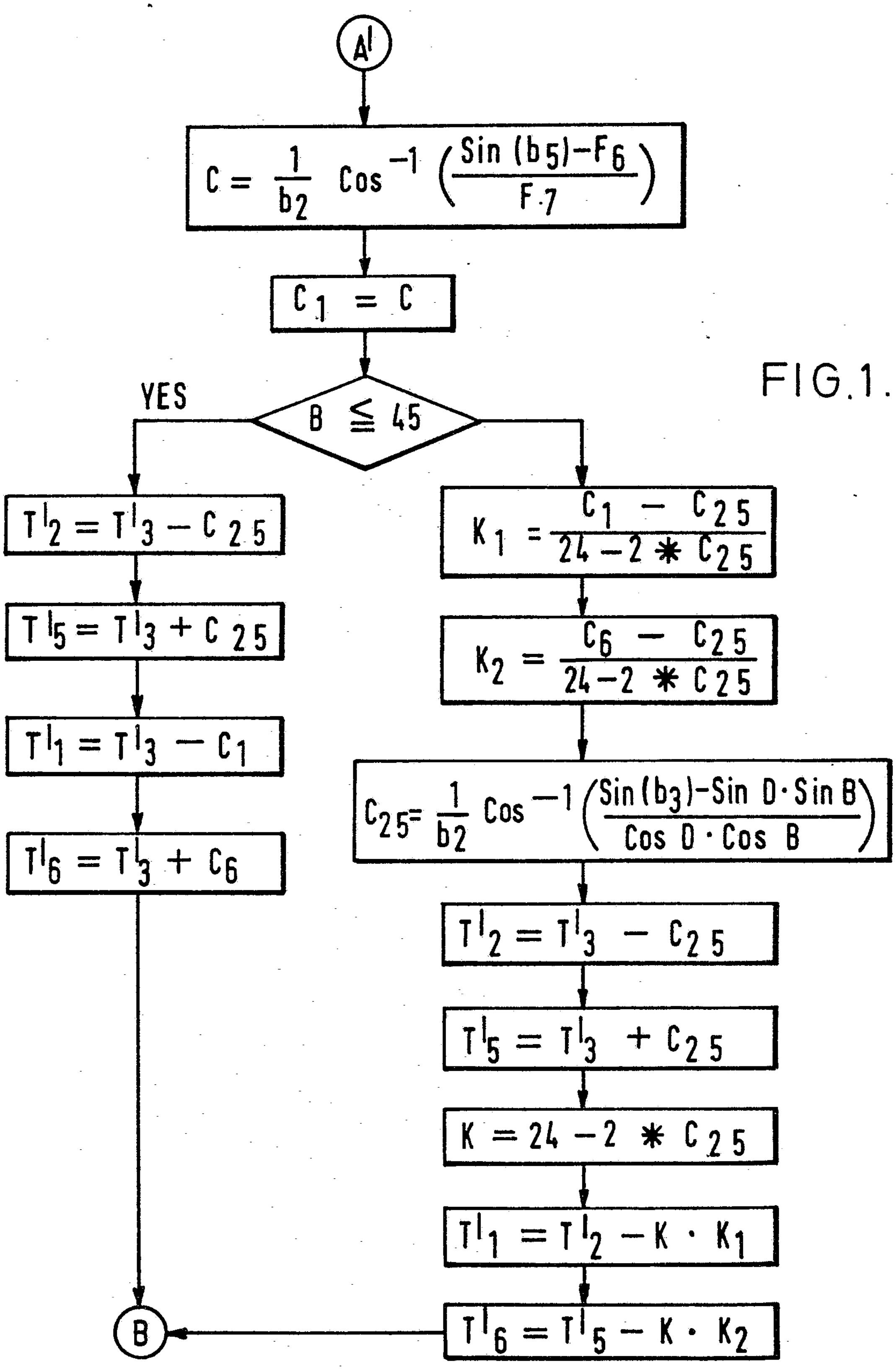
A'
C = 1/b2 Cos^-1 ((Sin (b5)-F6)/F·7)
C1 = C
B ≦ 45
YES
T'2 = T'3 - C25
T'5 = T'3 + C25
T'1 = T'3 - C1
T'6 = T'3 + C6
K1 = (C1 - C25)/(24-2 * C25)
K2 = (C6 - C25)/(24-2 * C25)
C25 = 1/b2 Cos -1 ((Sin (b3)-Sin D·Sin B)/(Cos D · Cos B))
T'2 = T'3 - C25
T'5 = T'3 + C25
K = 24 -2 * C25
T'1 = T'2 - K · K1
T'6 = T'5 - K · K2
B

FIG.1.

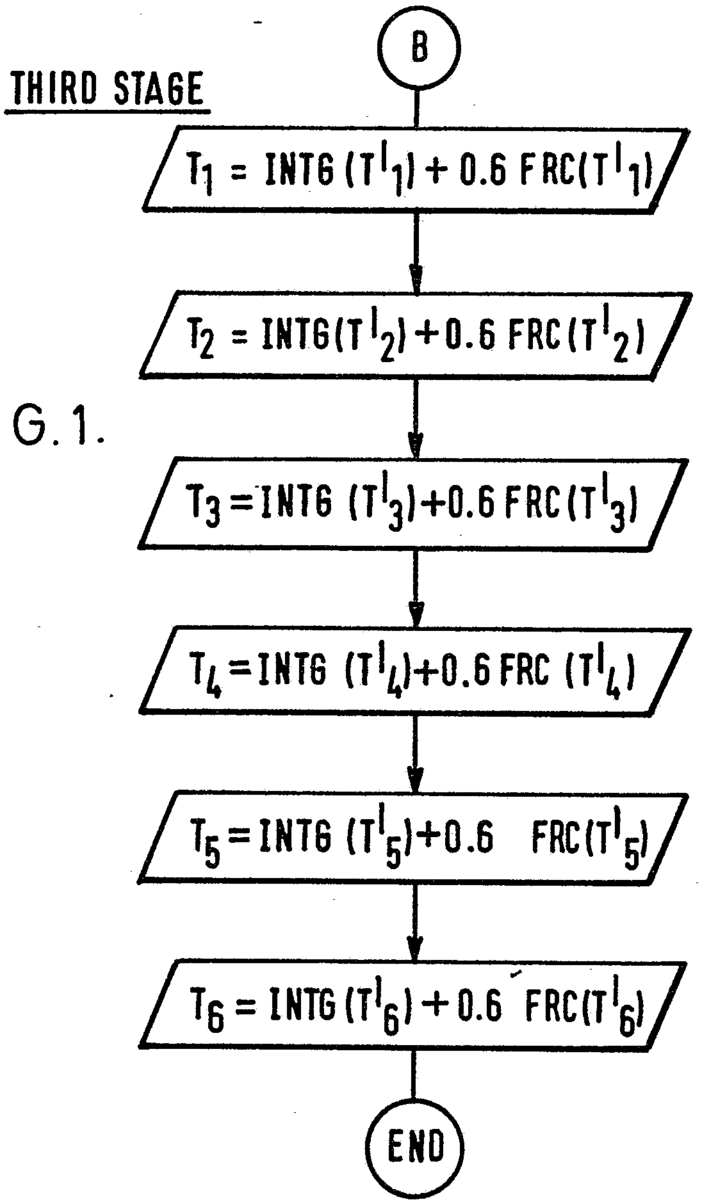
B
THIRD STAGE
T1 = INTG (T'1) + 0.6 FRC(T'1)
T2 = INTG(T'2) + 0.6 FRC(T'2)
T3 = INTG (T'3) + 0.6 FRC(T'3)
T4 = INTG (T'4) + 0.6 FRC (T'4)
T5 = INTG (T'5) + 0.6 FRC(T'5)
T6 = INTG (T'6) + 0.6 FRC(T'6)
END

FIG.1.

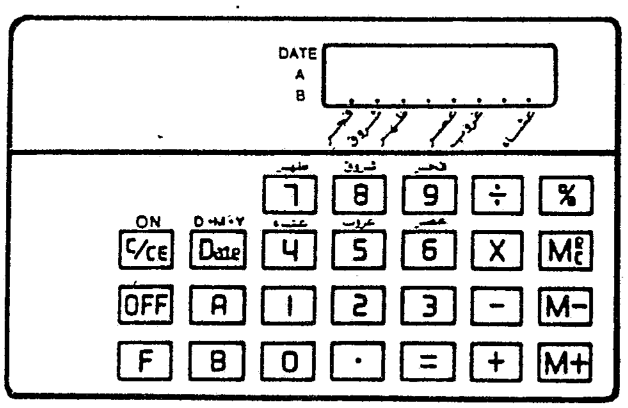
DATE
A
B
ON
D·M·Y
7
8
9
÷
%
C/CE
Date
4
5
6
X
MRC
OFF
A
1
2
3
−
M−
F
B
0
·
=
+
M+

FIG.2.